# FASCICULE DE BREVET EUROPEEN

(11) **EP 3 835 748 B1**
(45) Date de publication et mention de la délivrance du brevet: **09.04.2025**
(21) Numéro de dépôt: 20213361.7
(22) Date de dépôt: 11.12.2020
(51) Int. Cl.: G01M 11/02, G01N 21/88, G01B 11/25, G01N 21/958

(54) **SYSTEME DE CONTROLE D'AU MOINS UN COMPOSANT D'UN ELEMENT OPTIQUE**
KONTROLLSYSTEM MINDESTENS EINER KOMPONENTE EINES OPTISCHEN ELEMENTS
SYSTEM FOR CONTROLLING AT LEAST ONE COMPONENT OF AN OPTICAL ELEMENT

(30) Priorité: 13.12.2019 FR 1914420; 13.01.2020 FR 2000271
(43) Date de publication de la demande: 16.06.2021
(73) Titulaire: V-Optics, 67400 Illkirch-Graffenstaden (FR)
(72) Inventeur: JEHL, Arnaud, 67210 OBERNAI (FR)
(74) Mandataire: Cabinet Nuss

(56) Documents cités:
- EP-A1- 1 980 843
- EP-B1- 1 065 498
- WO-A2-2018/073577
- US-B1- 10 321 820

## Description

La présente invention se rapporte au domaine des dispositifs de contrôle de composants optiques et plus particulièrement au domaine des dispositifs de contrôle de composants ophtalmiques tels que des verres de lunettes ou lentilles intraoculaires.

Les composants optiques ont pour principale fonction d'opérer une déviation des rayons lumineux incidents. La déviation de la lumière au travers d'un composant est susceptible d'être réalisée selon plusieurs directions ou alternativement selon une unique direction et de façon divergente, convergente ou prismatique. Les déformations obtenues de l'image sont ainsi les illustrations de composantes sphériques, cylindriques ou encore prismatiques. Par ailleurs, certains composants optiques sont également susceptibles d'opérer des déformations correspondant à la combinaison de plusieurs de ces différentes composantes.

Ces déviations réalisées par le composant optique sont notamment caractérisées par leurs puissances optiques, la puissance optique se rapportant, d'une part, à la vergence d'une composante cylindrique ou sphérique et, d'autre part, au niveau de déplacement d'une composante prismatique. Aussi, ces puissances optiques forment des indices représentatifs du niveau de déplacement et de déformation de l'image d'un objet au travers d'un composant optique.

Dans le cadre d'une production de composants optiques notamment lorsque ceux-ci sont destinés à répondre à un degré minimal de qualité pour une application de correction ophtalmique, il est nécessaire de pouvoir s'assurer efficacement de leur conformité avec les propriétés exigées pour les composants optiques produits, ce qui inclut le respect des propriétés optiques prescrites par le médecin ophtalmologue telles que notamment la puissance et l'angle de la composante prismatique, la puissance et l'angle de la composante cylindrique principale, et la puissance de la composante cylindrique secondaire, cette composante cylindrique secondaire étant orthogonale à la composante cylindrique primaire, mais également l'absence de défauts de type rayure, trace d'usinage .

Actuellement, différentes solutions connues sont utilisées pour procéder au contrôle de composants optiques faisant intervenir l'utilisation d'un frontofocomètre manuel ou utilisant un capteur Shack-Hartmann, de l'interférométrie. Toutefois, ces différentes technologies telles qu'elles sont actuellement mises en œuvre dans l'état de l'art actuel, ne sont pas adaptées pour permettre un contrôle optimisé des puissances et des défauts de composants ophtalmiques sur l'ensemble de leur surface. De plus, il est complexe d'opérer de tels contrôles en haute définition et au-delà d'une gamme de puissance limitée à -25 à +25 dioptrie. Des systèmes de contrôle d'un composant d'un élément optique sont notamment illustrés par les publications WO 2018/073577 et EP 1065498.

La présente invention a pour but de pallier ces inconvénients en proposant une solution pour réaliser une optimisation de la vérification de différentes propriétés optiques d'un composant optique ou ophtalmique et de ses qualités sur l'ensemble de la surface du composant tout en autorisant une vérification dans une gamme de puissance plus étendue.

L'invention concerne ainsi un système de contrôle d'au moins un composant d'un élément optique tel que détaillé par l'énoncé de la revendication 1.

L'invention porte également sur un procédé de contrôle par mise en œuvre d'un système de contrôle d'au moins un composant d'un élément optique tel que détaillé par l'énoncé de la revendication 7.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

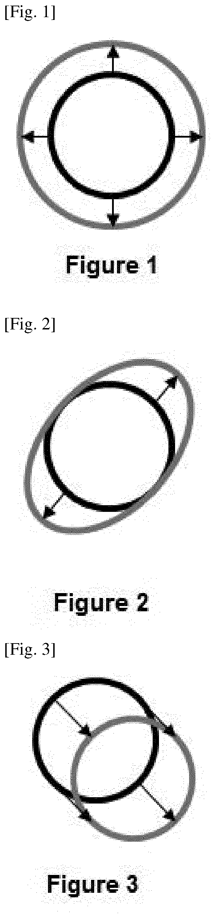

[Fig. 1] représente une illustration schématique d'une déformation opérée par un élément optique selon une composante sphérique.
[Fig. 2] représente une illustration schématique d'une déformation opérée par un élément optique selon une composante cylindrique.
[Fig. 3] représente une illustration schématique d'un déplacement opérée par un élément optique selon une composante prismatique.

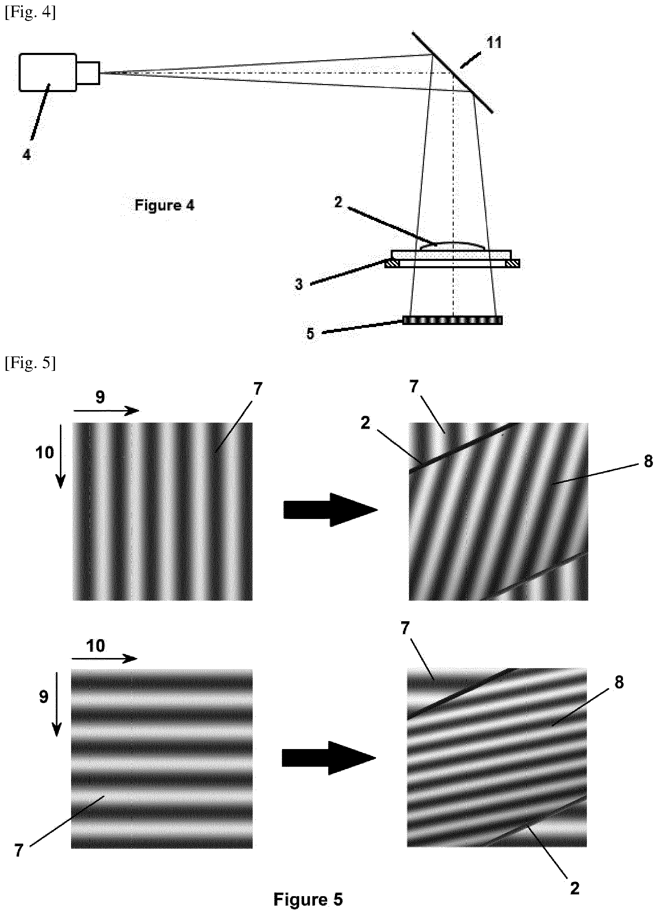

[Fig. 4] représente une illustration schématique d'un exemple d'arrangement de différents dispositifs d'un système de contrôle selon l'invention,
[Fig. 5] représente une illustration de la déformation opérée par un élément optique cylindrique divergent sur deux images projetées présentant des variations respectives d'intensité lumineuse périodique disposées selon des franges parallèles et dont les axes d'orientation respectifs de la variation d'intensité lumineuse sont orientés perpendiculairement l'un par rapport à l'autre, l'élément optique présentant deux bords parallèles et étant disposés en biais par rapport aux franges des images projetées,

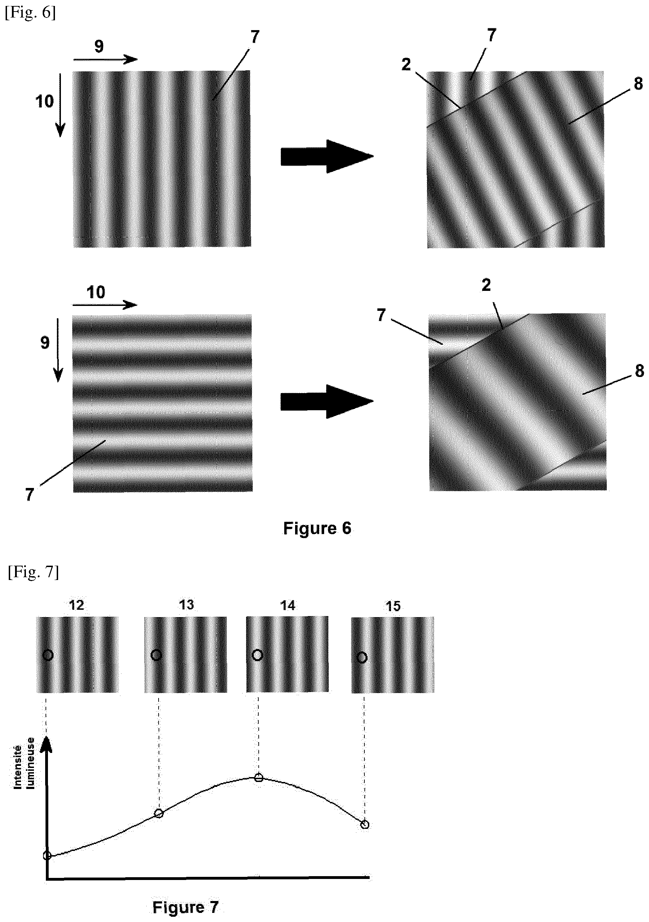

[Fig. 6] représente une illustration de la déformation opérée par un élément optique cylindrique convergent sur deux images projetées présentant des variations respectives d'intensité lumineuse périodique disposées selon des franges parallèles et dont les axes d'orientation respectifs de la variation d'intensité lumineuse sont orientés perpendiculairement l'un par rapport à l'autre, l'élément optique présentant deux bords parallèles et étant disposés en biais par rapport aux franges des images projetées.
[Fig. 7] représente une illustration de l'identification de la courbe de la variation d'intensité lumineuse périodique portée par quatre images formant une série et présentant un décalage de phase.

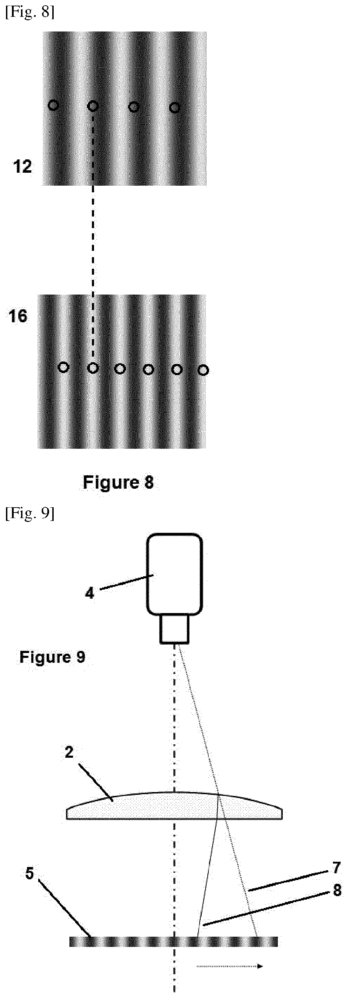

[Fig. 8] représente une illustration de l'identification de la position d'un point particulier par comparaison de localisations potentielles identifiées sur deux images lumineuses issues de séries respectives.
[Fig. 9] représente une illustration schématique de la déformation et/ou du déplacement opéré par un élément optique dans le cadre d'un exemple d'arrangement de différents dispositifs d'un système de contrôle selon l'invention.

Le système de contrôle 1 de l'invention est arrangé pour permettre la mise en œuvre d'une analyse de la déformation d'un élément optique 1 par comparaison d'un ou de plusieurs éléments d'une image projetée 7 avec les éléments correspondants de cette même image après que celle-ci soit déformée par l'élément optique 2. L'image projetée 7 par le dispositif de projection 4 de l'invention comporte une variation d'intensité lumineuse périodique. Lors du passage de l'image projetée 7 au travers de l'élément optique 1, celle-ci supporte une modification de sorte que l'image 8 correspondante ayant traversée l'élément optique 2 présente une variation d'intensité décalée et/ou déformée par rapport à celle de l'image projetée 7 initiale.

Dans le cadre du système de contrôle 1 selon l'invention, l'unité de calcul opère un contrôle de l'élément optique 2 par comparaison entre, d'une part, l'image projetée 7 prise comme référence, c'est-à-dire une image acquise par le dispositif d'acquisition 5 et issue de l'image lumineuse projetée 7 sans que cette image n'ait traversé un élément optique 2, et, d'autre part, une image lumineuse acquise qui est issue de l'image lumineuse projetée 7 et a traversé l'élément optique 2.

L'image utilisée pour la détermination de la puissance optique de l'élément 2 contrôlé correspond à une variation d'intensité lumineuse périodique. En effet, l'image projetée 7 présentant par ses dimensions une forme sensiblement rectangulaire, la variation d'intensité lumineuse périodique est disposée selon un premier axe 9 du plan de l'image de sorte que l'image se présente sous la forme d'une pluralité de franges juxtaposées, parallèles entre elles et orientées selon un second axe 10 du plan de l'image, ce second axe 10 étant perpendiculaire au premier axe 9. Un système de contrôle 1 qui intègre une image 7 projetée avec un arrangement de franges juxtaposées permet ainsi d'opérer un contrôle de la déformation réalisée par l'élément optique 2 de façon plein champ, c'est-à-dire simultanément sur l'ensemble de la surface de l'élément optique 2. Les franges rectilignes parallèles et juxtaposées de cette image projetée 7 permettent ainsi le contrôle de la déformation réalisée par l'élément optique 2 selon une composante perpendiculaire aux axes 10 parallèles des différentes franges rectilignes. Aussi, l'utilisation d'une image projetée 7 comprenant une variation d'intensité lumineuse périodique disposée selon des franges parallèles permet d'identifier et de contrôler une déformation opérée par l'élément optique 2 en chacun des points de sa surface et selon une même composante, cette composante étant perpendiculaire aux axes 10 parallèles des différentes franges rectilignes de l'image 7.

Dans le cadre du système 1 selon l'invention, il convient de relever que le dispositif de projection 4 se rapporte à un dispositif d'affichage lumineux tel qu'un écran ou un afficheur lumineux. Ce dispositif de projection 4 qu'est le dispositif d'affichage lumineux permet d'opérer une analyse de la déformation d'un élément optique 1 à partir d'une image projetée. Selon un exemple particulier préférentiel, cette image projetée correspond à une image projetée par diffusion depuis un écran.

Selon l'invention, l'unité de calcul est configurée pour mettre en œuvre un traitement d'images lumineuses par comparaison de la position d'au moins deux points d'une image lumineuse projetée 7, c'est-à-dire une image lumineuse acquise par le dispositif d'acquisition sans traverser l'élément optique 2 et donc sans déformation par celui-ci, avec au moins deux points de l'image lumineuse acquise 8 issue de l'image lumineuse projetée 7 et ayant traversé l'élément optique 2. Dans le cadre du système 1 de l'invention, l'image lumineuse 7 utilisée comprend une variation d'intensité lumineuse périodique réalisée sous la forme de franges successives parallèles. La variation d'intensité formée par ces franges juxtaposées parallèles est ainsi orientée selon un axe 9 perpendiculaire aux axes 10 parallèles des différentes franges rectilignes. Cette orientation de la variation d'intensité lumineuse définit ainsi l'axe 9 de la composante de la déformation de l'élément optique 2 selon lequel le contrôle par l'image lumineuse 7 est effectué. Dans le cadre du système de l'invention, la prise en compte d'un point unique de l'image lumineuse projetée 7 pour être comparé avec un point correspondant de l'image acquise ayant traversée l'élément optique 2 permet uniquement la démonstration d'un éventuel déplacement de l'image selon l'axe 9 de la composante de contrôle que permet l'orientation des franges de l'image projetée 7, sans pour autant caractériser une déformation. En revanche, la prise en compte d'au moins deux points permet de calculer une déformation selon cette même composante de contrôle imposée par l'orientation des franges de l'image projetée 7. En effet, le déplacement d'un point est alors susceptible d'être caractérisé par rapport à un deuxième point. Ainsi, le traitement opéré par l'unité de calcul s'appuie sur la prise en compte, d'une part, d'un premier point de l'image lumineuse projetée 7 considéré comme référence et, d'autre part, d'au moins un second point dont la position est définie par rapport au premier point. Le déplacement de ces points entre eux au niveau de l'image 8 acquise après traversée de l'élément optique 2 permet une caractérisation de la déformation que réalise l'élément optique 2 sur l'image projetée 7 selon l'axe 9 de la composante de contrôle.

Dans le cadre de l'invention, l'image projetée 7 correspond à une variation d'intensité lumineuse périodique disposée selon des franges parallèles, de sorte que la variation d'intensité lumineuse est orientée selon un axe 9 du plan de l'image perpendiculaire aux axes 10 parallèles de chacune des franges de l'image 7. Aussi, dans le cadre d'une opération de contrôle de la déformation selon une composante définie par l'orientation des franges de l'image projetée 7, un point de l'image pris en considération par l'unité de calcul du système 1 de l'invention est susceptible de correspondre à une portion de la longueur d'une même frange de l'image projetée 7. Par conséquent, l'image projetée 7 ne permet pas de déterminer un éventuel déplacement, ni une éventuelle déformation selon une direction parallèle aux axes 10 parallèles de chacune des franges de l'image 7.

Selon un autre exemple particulier de construction du système de contrôle 1 selon l'invention compatible avec l'exemple précédemment détaillé, au moins le dispositif de support 3, le dispositif de projection 4 et le dispositif d'acquisition 5 sont montés sur un même bâti. L'agencement de ces trois dispositifs 3, 4, 5 montés sur un bâti commun permet de faciliter le déplacement et l'installation de l'ensemble du système de contrôle 1. Ainsi, outre une éventuelle mise au point ou vérification du système de contrôle 1 afin de s'assurer de l'absence de déplacement relatif des différents dispositifs 3, 4, 5 entre eux lors de l'installation ou du déplacement du système 1, l'installation sur un bâti commun de ces différents dispositifs 3, 4, 5 permet d'opérer un calibrage et un étalonnage du système de contrôle 1 préalable qui autorise à s'affranchir de ces opérations à chaque nouvelle utilisation du système de contrôle 1.

Selon un autre exemple particulier de construction du système de contrôle 1 selon l'invention compatible avec un ou plusieurs des exemples précédemment détaillés, le système 1 comprend au moins une surface de réflexion 11 positionnée sur l'axe du chemin optique de l'image lumineuse 7 entre le dispositif de projection 4 et le dispositif d'acquisition 5. L'utilisation d'une ou plusieurs surfaces de réflexion 11 autorise une adaptation du positionnement spatial des différents éléments que sont le dispositif de support 3, le dispositif de projection 4 et le dispositif d'acquisition 5, de sorte que l'arrangement autorise une réduction optimisée de l'encombrement des différents dispositifs 3, 4, 5 du système 1. Cette réduction de l'encombrement du système de contrôle 1 de l'invention, notamment lorsque les différents dispositifs 3, 4, 5 sont montés sur un bâti, permet d'en faciliter la manipulation lors, par exemple, d'un déplacement ou d'une installation.

Selon un autre exemple particulier de construction du système de contrôle 1 selon l'invention compatible avec un ou plusieurs des exemples précédemment détaillés, au moins un élément parmi une liste incluant le dispositif de support 3, le dispositif de projection 4, le dispositif d'acquisition 5 et/ou la surface de réflexion 11 est monté mobile par rapport à un ou plusieurs autres éléments du système 1 montés fixe. Cette construction particulière autorise ainsi la réalisation d'opération de contrôle au niveau de plusieurs éléments optiques 2 successivement positionnés sur le dispositif de support 3 sur l'axe du chemin optique de l'image lumineuse 7 entre le dispositif de projection 4 et le dispositif d'acquisition 5. Il convient de relever que lorsque le dispositif de support 3, le dispositif de projection 4 et le dispositif d'acquisition 5 sont montés sur un même bâti, les dispositifs qui présentent une mobilité sont montés à la structure du bâti par l'intermédiaire d'une interface de déplacement telle que, par exemple, un rail de coulissement. Cette mobilité est également susceptible d'être gérée par une unité de calcul et/ou de contrôle du déplacement de chacun de ces dispositifs 3, 4, 5, d'une part, par rapport à la structure du bâti qui les porte et, d'autre part, par rapport aux différents dispositifs montés mobiles entre eux.

Selon une spécificité de cet exemple particulier de construction, le dispositif de support 3 est monté mobile par rapport à l'axe du chemin optique de l'image lumineuse entre le dispositif de projection 4 et le dispositif d'acquisition 5. Aussi, lorsque le dispositif de support 3 réalisé, par exemple, sous la forme d'un plateau qui porte une pluralité d'éléments optiques 2 à analyser, ce dispositif de support 3 est arrangé en mobilité de façon à autoriser son déplacement, par exemple par translation, de façon à positionner successivement chacun des éléments 2 optiques sur l'axe du chemin optique de l'image lumineuse 7 projetée. La translation du dispositif de support 3 se trouve ainsi opérée au niveau d'une position identique le long du chemin optique.

Selon une autre spécificité de cet exemple particulier susceptible d'être combinée avec la spécificité précédente, le dispositif d'acquisition 5 est monté mobile par rapport au dispositif de projection 4 qui demeure fixe avec le bâti. Le dispositif de projection 4 se trouve alors réalisé sous la forme d'un dispositif d'affichage lumineux qui présente une surface suffisamment large pour permettre la projection d'une image au travers d'une pluralité d'éléments optiques 2 à analyser portée par un dispositif de support 3 qui présente la forme d'un plateau. Selon cet exemple spécifique, le dispositif d'acquisition 5 est translaté à une distance constante par rapport au plan de positionnement des éléments optiques 2 à analyser, voire par rapport au plan du dispositif de projection 4. Le dispositif d'acquisition 5 se positionne successivement de façon à aligner chaque élément optique 2 sur l'axe de son chemin optique d'acquisition.

Selon une autre spécificité de cet exemple particulier, alternative ou susceptible d'être combinée avec la spécificité précédente, les dispositifs de projection 4 et d'acquisition 5 sont arrangés en mobilité de façon à être déplacés, par exemple par translation, à distance constante du dispositif de support 3 qui, sous la forme d'un plateau, porte une pluralité d'éléments optiques 2 à analyser. Aussi, la translation du dispositif de projection 4 et du dispositif d'acquisition 5 est opérée de sorte que l'axe du chemin optique de l'image lumineuse 7 projetée traverse successivement chacun des éléments 2 optiques porté par le dispositif de support 3. Lors du déplacement du dispositif de projection 4 et du dispositif d'acquisition 5, le dispositif de support 3 et donc les différents éléments optiques 2 portés sont positionnés au niveau d'une position identique le long du chemin optique.

Selon un autre exemple particulier de construction du système de contrôle 1 selon l'invention compatible avec un ou plusieurs des exemples précédemment détaillés, le dispositif de projection 4 est configuré pour projeter successivement au moins deux images 7, chaque image 7 correspondant à une variation d'intensité lumineuse disposée selon des franges orientées selon un axe 10 propre à chaque image 7. Selon cet exemple particulier, au moins deux images sont projetées successivement de sorte que chacune de ces images projetées 7 permet un contrôle du déplacement et de la déformation réalisées par l'élément optique 2 selon au moins une composante 9 respective. Aussi, lorsque les axes 10 des franges parallèles des images 7 présentent des orientations différentes, le contrôle du déplacement et de la déformation de l'image opérée par l'élément optique 2 est effectué selon deux composantes différentes. Chacune des images 7 par leur variation d'intensité lumineuse sous forme de franges parallèles permettant un contrôle du déplacement et de la déformation en chacun des points de la surface de l'élément optique 2, la combinaison des composantes de déplacement et de déformation obtenues grâce aux deux images successives autorise alors un contrôle du déplacement et de la déformation effectuée par l'élément optique 2 en chacun des points de sa surface. Selon une mise en œuvre préférée de cette particularité de construction, les axes 10 des franges parallèles des images 7 présentent des orientations orthogonales entre elles de sorte que le contrôle du déplacement et de la déformation par l'élément optique 2 est effectué selon deux composantes orthogonales.

Selon un autre exemple particulier de construction du système de contrôle 1 selon l'invention compatible avec un ou plusieurs des exemples précédemment détaillés, le dispositif de projection 4 est configuré pour projeter successivement au moins deux images 7, chaque image 7 présentant une variation d'intensité lumineuse identique disposée selon des franges orientées selon un axe 10 identique, la variation d'intensité lumineuse présentant un décalage de phase entre les différentes images 7.

Selon une spécificité préférentielle de mise en œuvre de cet exemple particulier de construction, le dispositif de projection 4 est configuré pour projeter successivement une première série 12, 13, 14, 15 de quatre images 7, chaque image étant formée par une variation d'intensité lumineuse identique présentant un décalage de phase entre chacune de ces différentes images. Une mesure de l'intensité lumineuse est alors effectuée au niveau d'au moins une même position de chacune des quatre images lumineuses acquises 8 issue de chacune des quatre images lumineuses projetées 7 de la première série et ayant traversé l'élément optique 2, de sorte que, à partir des quatre valeurs d'intensité lumineuse mesurées à une même position, la courbe de variation d'intensité lumineuse périodique des images lumineuses projetées 7 et ayant traversé l'élément optique 2 est apte à être déterminée. Aussi, la mesure de l'intensité lumineuse au niveau d'au moins un point particulier de l'image lumineuse acquise issue d'une image lumineuse projetée 12 issue de la première série et ayant traversé l'élément optique 2 permet d'identifier, par correspondance de phase, la localisation de chacun des différents points ou franges de cette image lumineuse projetée 12 issue de la première série et susceptible de correspondre à ce au moins un point particulier de l'image lumineuse acquise.

La même opération est répétée à partir d'une seconde série de quatre images présentant une variation d'intensité identique avec un décalage de phase entre elles, la longueur d'onde de la variation d'intensité des images de cette seconde série étant différentes de celle des images de la première série, de sorte que la mesure de l'intensité lumineuse au niveau du au moins un point particulier d'une image lumineuse acquise issue d'une image lumineuse projetée 16 de la seconde série et ayant traversé l'élément optique 2 permet d'identifier, par correspondance de phase, la localisation de chacun des points ou franges de cette image lumineuse projetée 16 de la seconde série susceptible de correspondre à ce au moins un point particulier de l'image lumineuse acquise.

Une comparaison des positions potentielles identifiées à partir de chacune des deux images lumineuses projetées 12, 16 issues respectivement de la première série et de la seconde série permet alors une identification de la position selon une première composante correspondant à l'axe 9 de variation d'intensité lumineuse des images projetées, du point d'une image lumineuse projetée quelconque qui correspond au point particulier de l'image lumineuse acquise.

La répétition de ces opérations avec deux nouvelles séries d'images présentant des variations d'intensité lumineuse disposées selon des franges et avec une orientation selon un axe 9 perpendiculaire à l'axe 9 des variations d'intensité lumineuse des deux premières séries d'images permet alors d'identifier, selon une seconde composante, la position du au moins un point d'une image lumineuse projetée correspondant au moins un point particulier de l'image lumineuse acquise 8.

Aussi, la combinaison des composantes identifiées en un point d'une image lumineuse projetée correspondant à un point quelconque de l'image lumineuse acquise 8 permet ainsi de déterminer les coordonnées de la position de ce point sur la surface de l'image lumineuse projetée.

Selon une spécificité de cet exemple particulier, au moins deux images 7 sont projetées simultanément dans un spectre lumineux respectif, par exemple dans une couleur lumineuse respective, de sorte que l'image acquise qui correspond à la combinaison des au moins deux images projetées 7 et ayant traversé l'élément optique 2, permette d'identifier, par l'intermédiaire d'un filtre, la déformation réalisée par l'élément optique 2 sur chaque image projetée qui le traverse. Aussi, les différentes d'images lumineuses projetées d'une même série sont susceptibles d'être réunies sous la forme d'une projection unique dans laquelle chaque image est projetée dans un spectre lumineux respectif. De façon complémentaire ou alternative, les images projetées simultanément correspondent :
- à des séries d'images dans lesquelles, chaque image est formée par une variation d'intensité lumineuse identique mais présentant un décalage de phase entre chacune de ces différentes images, ou
- à différentes images dans lesquelles, chaque image est formée par une variation d'intensité lumineuse similaire dont la longueur d'onde diffère entre chacune de ces images.

L'invention porte également sur un procédé de contrôle par mise en œuvre d'un système de contrôle 1 d'au moins un composant d'un élément optique 2 comprenant :
- un dispositif de projection 4, tel qu'un écran ou un afficheur, d'au moins une image lumineuse sur un élément optique 2 à contrôler,
- un dispositif d'acquisition 5 d'au moins une partie de l'image lumineuse ayant traversé l'élément optique 2 à contrôler et issue de l'image lumineuse projetée 7,
caractérisé en ce que le procédé comprend au moins :
- une étape de positionnement d'un élément optique 2 à contrôler,
- une étape de projection d'une image lumineuse 7 sur au moins une partie de la surface de l'élément optique 2 à contrôler, l'image correspondant à une variation d'intensité lumineuse périodique disposée selon des franges parallèles et orientée selon un axe 9 défini,
- une étape d'acquisition d'au moins une partie de l'image lumineuse 8 ayant traversé l'élément optique 2 à contrôler et issue de l'image lumineuse projetée 7
- une étape de comparaison de la position d'au moins deux points de la première image lumineuse projetée 7 avec la position d'au moins deux points de l'image lumineuse acquise 8 issue de la première image lumineuse projetée 7 et ayant traversé l'élément optique 2,
- une étape de détermination du grossissement ou déplacement prismatique de l'élément optique 2 selon l'axe 9 de la variation d'intensité lumineuse de l'image 7,
- une étape d'évaluation de la puissance optique de l'élément optique 2 selon l'axe 9 de la variation d'intensité lumineuse de l'image 7 à partir de son grossissement ou déplacement prismatique.

Dans le cadre de l'étape de comparaison, il convient de relever la nécessaire correspondance entre, d'une part, les points de la première image lumineuse projetée 7 et, d'autre part, les points de l'image lumineuse acquise 8 issue de la première image lumineuse projetée 7 et ayant traversé l'élément optique 2.

Selon un exemple particulier de mise en œuvre, le procédé comprend également
- une étape de projection d'une seconde image lumineuse 7 sur au moins une partie de la surface de l'élément optique 2 à contrôler, la seconde image correspondant à une variation d'intensité lumineuse périodique disposée selon des franges parallèles et orientée selon un second axe 9, le second axe 9 étant sécant par rapport à l'axe 9 d'une image similaire précédemment projetée
- une étape d'acquisition d'au moins une partie de l'image lumineuse 8 ayant traversé l'élément optique 2 à contrôler et issue de la seconde image lumineuse projetée 7,
- une étape de comparaison de la position d'au moins deux points de la seconde image lumineuse projetée 7 avec au moins deux points de l'image lumineuse acquise 8 issue de la seconde image lumineuse projetée 7 et ayant traversé l'élément optique 2,
- une étape de détermination du grossissement ou déplacement prismatique de l'élément optique 2 selon l'axe 9 de la variation d'intensité lumineuse de la seconde image 7,
- une étape d'évaluation de la puissance optique de l'élément optique 2 à partir des grossissements ou déplacements prismatiques déterminés selon au moins les variations d'intensité lumineuse de la première image et de la seconde image.

Aussi lorsque la seconde image correspond à une variation d'intensité lumineuse périodique disposée selon des franges parallèles et orientée selon un second axe 9, le second axe 9 étant sécant par rapport à l'axe 9 d'une image similaire précédemment projetée, l'étape de comparaison de la position d'au moins deux points de la seconde image projetée avec au moins deux points de l'image lumineuse acquise 8 issue de la seconde image lumineuse projetée 7 et ayant traversé l'élément optique 2 permet une évaluation de la déformation et/ou du déplacement opéré par l'élément optique 2.

Selon l'invention, le procédé de contrôle comprend également :
- une étape de projection d'une nouvelle image lumineuse 7 sur au moins une partie de la surface de l'élément optique 2 à contrôler, la nouvelle image correspondant à une variation d'intensité lumineuse disposée selon des franges orientées selon un axe 10 identique à celui de l'image précédemment projetée, la variation d'intensité lumineuse présentant une longueur d'onde différente de celle de l'image précédemment projetée,
- une étape d'acquisition d'au moins une partie de l'image lumineuse 8 ayant traversé l'élément optique 2 à contrôler et issue de la nouvelle image lumineuse projetée 7,
- une étape de comparaison de l'intensité lumineuse d'au moins un point de la nouvelle image lumineuse projetée 7 avec au moins un point de l'image lumineuse acquise 8 issue de la nouvelle image lumineuse projetée 7 et ayant traversé l'élément optique 2,
- une étape de détermination d'au moins une composante de la position du point de l'image lumineuse projetée 7 correspondant au au moins un point de position identifiée d'une image lumineuse acquise 8 issue d'une image lumineuse projetée 7 et ayant traversé l'élément optique 2.

Selon la première spécificité de mise en œuvre du procédé de l'invention, dans lequel la seconde image correspond à une variation d'intensité lumineuse présentant un décalage de phase par rapport à celle de l'image précédemment projetée, la variation d'intensité étant disposée selon des franges orientées selon un axe 10 identique à celui de l'image similaire précédemment projetée, le décalage de phase de la variation d'intensité entre les images similaires projetées permet de déterminer la courbe de variation d'intensité lumineuse périodique des images lumineuses pour identifier les différents points de l'image lumineuse projetée susceptible de correspondre à un point particulier de l'image lumineuse acquise dont la position est définie.

Selon la seconde spécificité de mise en œuvre du procédé de l'invention, c'est-à-dire lorsque la seconde image correspond à une variation d'intensité lumineuse présentant une longueur d'onde différente de celle de l'image 7 précédemment projetée, la variation d'intensité étant disposée selon des franges orientées selon un axe 10 identique à celui de l'image précédemment projetée, la différence de longueur d'onde dans la variation d'intensité lumineuse entre les images projetée permet une identification du point de l'image lumineuse projetée dont la composante selon l'axe 9 de la variation d'intensité correspond à celle d'un point particulier de l'image lumineuse acquise dont la position est définie.

Un exemple d'explication complémentaire du système de l'invention est apporté par les paragraphes suivant.

La présente invention concerne les dispositifs de contrôle de composants optiques, en particulier ophtalmiques, tels que des verres de lunettes ou lentilles intraoculaires. Ce contrôle a pour but de caractériser d'un part les propriétés optiques, en particulier les puissances optiques, locales ou globales du composant, et d'autre part les défauts cosmétiques de diverses natures.

### Architecture :

La présente invention est constituée d'au minimum 3 éléments principaux :
- Un dispositif d'affichage, tel qu'un écran. De façon avantageuse, cet écran est destiné à afficher une série de motifs sous forme de franges sinusoïdales
- Un dispositif d'acquisition d'images, tel qu'un caméra, caractérisé par un champ de vision comportant un axe central. Ce dernier est orienté, directement ou par l'intermédiaire d'un ou plusieurs miroirs, en regard du dispositif d'affichage, et selon une direction normale à celui-ci.
- Un dispositif de maintien du composant optique à contrôler, un tel maintien pouvant être un simple posage. Ce dispositif de maintien est conçu de façon à positionner ledit composant optique entre le dispositif d'affichage et le dispositif d'acquisition, dans le champ de vision du dispositif d'acquisition, et selon une orientation qui peut être, de façon avantageuse, sensiblement normale à l'orientation du dispositif d'acquisition

Une telle architecture permet de répondre à l'objectif initial : une mesure de puissances optiques locales ou globale, et une détection de défauts cosmétiques.

De façon avantageuse on peut introduire une mobilité d'un élément, parmi le dispositif d'acquisition ou le dispositif de maintien, par rapport aux deux autres. Cette disposition permet un contrôle par lots ou en série des composants optique. On peut ainsi imaginer plusieurs types de constructions :
- Dispositif de maintien matriciel fixe, dispositif d'acquisition mobile selon 2 axes. Il s'agit de la solution actuellement commercialisée.
- Dispositif de maintien matriciel et mobile selon 2 axes, dispositif d'acquisition fixe
- Dispositif de maintien sous forme de plateau tournant. Cette solution a l'avantage de permettre un chargement / déchargement des composants en temps masqué
- Dispositif de maintien intégré à un convoyeur. Dans ce cas, on considère le dispositif de maintien comme un élément extérieur au dispositif de contrôle
- Dispositif de maintien intégré à un bras robotisé. Dns ce cas, on considère le dispositif de maintien comme un élément extérieur au dispositif de contrôle

### Mesure de puissance :

L'application de la déflectométrie couramment pratiquée consiste à observer l'image, au travers du composant optique à contrôler, d'une séries de franges sinusoïdales orientées selon une direction, puis d'une seconde série de franges orientées selon une direction orthogonale à la première.

Cette technique, dans le cadre de la mesure de puissance de composants optiques, peut être exploitée de deux manières :

Mesure du grossissement via la fréquence spatiale des images des franges : cela revient à mesurer le déformation d'un objet. L'algorithme de traitement des données dans le cadre de l'invention diffère de celui de l'état de l'art. En revanche, cette méthode ne permet pas de mesurer le composante prismatique de la puissance optique
Reconstruction des chemins optiques grâce à l'identification de la position du point émetteur. Cette méthode demande une calibration plus détaillée, mais autorise la mesure de la composante prismatique de la puissance optique

### Détection de défauts :

**Il** est impossible de définir une méthode générale de détection et de discrimination des défauts, car ceux-ci sont spécifiques à chaque application. Tout l'art de la vision réside dans le choix des signaux qui permettront cette détection et cette discrimination. A ce titre, les données issues de la déflectométrie sont particulièrement intéressantes.

L'algorithme de traitement des données dans le cadre de l'invention diffère de celui de l'état de l'art.

L'application de la déflectométrie dans la mesure de composants optiques, en particuliers ophtalmiques, permet de façon très rapide et très peu coûteuse de contrôler l'ensemble des caractéristiques de ces composants : leur puissance optique (globale et/ou locale) et leurs défauts cosmétiques éventuels. Cet avantage ne peut pas peut être obtenu par les autres technologies, sauf à les associer à un capteur supplémentaire.

Par ailleurs, l'ajout d'une mobilité d'un élément, parmi le dispositif d'acquisition ou le dispositif de maintien, autorise la mesure des éléments optiques par lot ou en série, ce qui n'est, à notre connaissance, pas appliqué industriellement.

## Revendications

1. Système de contrôle (1) d'au moins un composant d'un élément optique (2), le système (1) comprenant au moins :
- un dispositif de support (3) d'au moins un élément optique (2) à contrôler,
- un dispositif de projection (4), tel qu'un écran ou un afficheur, d'au moins une image lumineuse sur un élément optique (2) à contrôler, l'image lumineuse comportant un schéma défini,
- un dispositif d'acquisition (5) d'au moins une partie de l'image lumineuse ayant traversé l'élément optique (2) à contrôler et issue de l'image lumineuse projetée, l'angle (6) solide de vision du dispositif d'acquisition (5) comprenant le dispositif de support (3) associé à l'élément optique (2) à contrôler,
**caractérisé en ce que** le système comprend également :
- une unité de calcul configurée pour déterminer la puissance optique de l'élément (2) contrôlé à partir, d'une part, d'au moins deux points d'au moins d'une image lumineuse projetée (7) acquise par le dispositif d'acquisition sans traverser l'élément optique (2) et, d'autre part, d'au moins deux points de l'image lumineuse acquise (8) issue de l'image lumineuse projetée (7) et ayant traversé l'élément optique (2),
le dispositif de projection (4) étant configuré pour projeter successivement au moins deux images (7), chaque image (7) correspondant à une variation d'intensité lumineuse périodique disposée selon des franges parallèles et orientées selon un axe (10) identique, la variation d'intensité lumineuse de la seconde image projetée présentant une longueur d'onde différente de celle de la première image précédemment projetée.

2. Système de contrôle (1) selon la revendication 1, **caractérisé en ce que** au moins le dispositif de support (3), le dispositif de projection (4) et le dispositif d'acquisition (5) sont montés sur un même bâti.

3. Système de contrôle (1) selon une des revendications précédentes, **caractérisé en ce que** système (1) comprend au moins une surface de réflexion (11) positionnée sur l'axe du chemin optique de l'image lumineuse (7) entre le dispositif de projection (4) et le dispositif d'acquisition (5).

4. Système de contrôle (1) selon une des revendications précédentes, **caractérisé en ce que** au moins un élément parmi une liste incluant le dispositif de support (3), le dispositif de projection (4), le dispositif d'acquisition (5) et/ou la surface de réflexion (11) est monté mobile par rapport à un ou plusieurs autres éléments du système (1) montés fixe.

5. Système de contrôle (1) selon la revendication 4, **caractérisé en ce que** le dispositif de support (3) est monté mobile par rapport à l'axe du chemin optique de l'image lumineuse entre le dispositif de projection (4) et le dispositif d'acquisition (5).

6. Système de contrôle (1) selon une des revendications précédentes, **caractérisé en ce que** l'unité de calcul est configurée pour mettre en œuvre un traitement d'images lumineuse par comparaison de la position d'au moins deux points d'une image lumineuse projetée (7) avec au moins deux points de l'image lumineuse acquise (8) issue de l'image lumineuse projetée (7) et ayant traversé l'élément optique.

7. Procédé de contrôle par mise en œuvre d'un système de
contrôle (1) d'au moins un composant d'un élément optique (2) comprenant :
- un dispositif de projection (4), tel qu'un écran ou un afficheur, d'au moins une image lumineuse sur un élément optique (2) à contrôler,
- un dispositif d'acquisition (5) d'au moins une partie de l'image lumineuse ayant traversé l'élément optique (2) à contrôler et issue de l'image lumineuse projetée (7),
le procédé comprenant au moins :
- une étape de positionnement d'un élément optique (2) à contrôler,
- une étape de projection d'une image lumineuse (7) sur au moins une partie de la surface de l'élément optique (2) à contrôler, l'image correspondant à une variation d'intensité lumineuse périodique disposée selon des franges parallèles et orientée selon un axe (9) défini,
- une étape d'acquisition d'au moins une partie de l'image lumineuse (8) ayant traversé l'élément optique (2) à contrôler et issue de l'image lumineuse projetée (7),
**caractérisé en ce que** le procédé comprend :
- une étape de comparaison de la position d'au moins deux points de la première image lumineuse projetée (7) acquise par le dispositif d'acquisition sans traverser l'élément optique avec la position d'au moins deux points de l'image lumineuse acquise (8) issue de la première image lumineuse projetée (7) et ayant traversé l'élément optique (2),
- une étape de projection d'une nouvelle image lumineuse (7) sur au moins une partie de la surface de l'élément optique (2) à contrôler, la nouvelle image correspondant à une variation d'intensité lumineuse disposée selon des franges orientées selon un axe (10) identique à celui de la première image précédemment projetée, la variation d'intensité lumineuse présentant une longueur d'onde différente de celle de la première image précédemment projetée,
- une étape d'acquisition d'au moins une partie de l'image lumineuse (8) ayant traversé l'élément optique (2) à contrôler et issue de la nouvelle image lumineuse projetée (7),
- une étape de comparaison de l'intensité lumineuse d'au moins un point de la nouvelle image lumineuse projetée (7) acquise par le dispositif d'acquisition sans traverser l'élément optique avec au moins un point de l'image lumineuse acquise (8) issue de la nouvelle image lumineuse projetée (7) et ayant traversé l'élément optique (2),
- une étape de détermination d'au moins une composante correspondant à l'axe (9) de variation d'intensité lumineuse, de la position du point de l'image lumineuse projetée (7) correspondant au au moins un point de position identifiée d'une image lumineuse acquise (8) issue d'une image lumineuse projetée (7) et ayant traversé l'élément optique (2)
- une étape de détermination du grossissement ou déplacement prismatique de l'élément optique (2) selon l'axe (9) de la variation d'intensité lumineuse de l'image (7), basée sur l'étape de comparaison de l'intensité lumineuse entre deux au moins un point,
- une étape d'évaluation de la puissance optique de l'élément optique (2) selon l'axe (9) de la variation d'intensité lumineuse de l'image (7) à partir de son grossissement ou déplacement prismatique.

8. Procédé de contrôle selon la revendication 7, **caractérisé en ce que** le procédé comprend également :
- une étape de projection d'une seconde image lumineuse (7) sur au moins une partie de la surface de l'élément optique (2) à contrôler, la seconde image correspondant à une variation d'intensité lumineuse périodique disposée selon des franges parallèles et orientée selon un second axe (9), le second axe (9) étant sécant par rapport à l'axe (9) d'une image similaire précédemment projetée,
- une étape d'acquisition d'au moins une partie de l'image lumineuse 8 ayant traversé l'élément optique (2) à contrôler et issue de la seconde image lumineuse projetée (7),
- une étape de comparaison de la position d'au moins deux points de la seconde image lumineuse projetée (7) avec au moins deux points de l'image lumineuse acquise (8) issue de la seconde image lumineuse projetée (7) et ayant traversé l'élément optique (2),
- une étape de détermination du grossissement ou déplacement prismatique de l'élément optique (2) selon l'axe (9) de la variation d'intensité lumineuse de la seconde image (7),
- une étape d'évaluation de la puissance optique de l'élément optique (2) à partir des grossissements ou déplacements prismatiques déterminés selon au moins les variations d'intensité lumineuse de la première image et de la seconde image.

9. Procédé de contrôle selon une des revendications 7 ou 8, **caractérisé en ce que** le procédé comprend également :
- une étape de projection d'une nouvelle image lumineuse (7) sur au moins une partie de la surface de l'élément optique (2) à contrôler, la nouvelle image correspondant à une variation d'intensité lumineuse identique à celle de l'image similaire précédemment projetée, la variation d'intensité étant disposée selon des franges orientées selon un axe (10) identique à celui de l'image similaire précédemment projetée, la variation d'intensité lumineuse présentant un décalage de phase par rapport à celle de l'image similaire précédemment projetée,
- une étape d'acquisition d'au moins une partie de l'image lumineuse (8) ayant traversé l'élément optique (2) à contrôler et issue de la nouvelle image lumineuse projetée (7),
- une étape de comparaison de l'intensité lumineuse d'au moins un point de la nouvelle image lumineuse projetée (7) avec au moins un point de l'image lumineuse acquise (8) issue de la nouvelle image lumineuse projetée (7) et ayant traversé l'élément optique (2),
- une étape de détermination d'au moins une composante de la position du point de l'image lumineuse projetée (7) correspondant au au moins un point de position identifiée d'une image lumineuse acquise (8) issue d'une image lumineuse projetée (7) et ayant traversé l'élément optique (2).

## Patentansprüche

1. System zur Kontrolle (1) mindestens einer Komponente eines optischen Elements (2), wobei das System (1) mindestens umfasst:
- eine Trägervorrichtung (3) für mindestens ein zu kontrollierendes optisches Element (2),
- eine Projektionsvorrichtung (4), wie etwa einen Bildschirm oder ein Display, zum Projizieren mindestens eines Lichtbilds auf ein zu kontrollierendes optisches Element (2), wobei das Lichtbild ein definiertes Schema beinhaltet,
- eine Erfassungsvorrichtung (5) zur Erfassung mindestens eines Teils des Lichtbilds, der das zu kontrollierende optische Element (2) durchquert hat und aus dem projizierten Lichtbild stammt, wobei der Sichtraumwinkel (6) der Erfassungsvorrichtung (5) die Trägervorrichtung (3) umfasst, die dem zu kontrollierenden optischen Element (2) zugeordnet ist,
**dadurch gekennzeichnet, dass** das System ferner umfasst:
- eine Recheneinheit, die dazu ausgestaltet ist, die optische Leistung des kontrollierten Elements (2) anhand, zum einen, von mindestens zwei Punkten mindestens eines projizierten Lichtbilds (7) das von der Erfassungsvorrichtung (5) erfasst wird, ohne das optische Element (2) zu passieren und, zum anderen, von mindestens zwei Punkten des erfassten Lichtbilds (8), das aus dem projizierten Lichtbild (7) stammt und das optische Element (2) durchquert hat, zu bestimmen,
wobei die Projektionsvorrichtung (4) dazu ausgestaltet ist, nacheinander mindestens zwei Bilder (7) zu projizieren, wobei jedes Bild (7) einer periodischen Lichtintensitätsänderung entspricht, die gemäß parallelen und gemäß einer identischen Achse (10) ausgerichteten Streifen angeordnet ist, wobei die Lichtintensitätsänderung des projizierten zweiten Bilds eine Wellenlänge aufweist, die verschieden von der des zuvor projizierten ersten Bilds ist.

2. System zur Kontrolle (1) nach Anspruch 1, **dadurch gekennzeichnet, dass** mindestens die Trägervorrichtung (3), die Projektionsvorrichtung (4) und die Erfassungsvorrichtung (5) an einem selben Gestell montiert sind.

3. System zur Kontrolle (1) nach einem der vorhergehenden Ansprüche, **dadurch gekennzeichnet, dass** das System (1) mindestens eine Reflexionsfläche (11) umfasst, die auf der Achse des optischen Pfads des Lichtbilds (7) zwischen der Projektionsvorrichtung (4) und der Erfassungsvorrichtung (5) positioniert ist.

4. System zur Kontrolle (1) nach einem der vorhergehenden Ansprüche, **dadurch gekennzeichnet, dass** mindestens ein Element aus einer Liste, die die Trägervorrichtung (3), die Projektionsvorrichtung (4), die Erfassungsvorrichtung (5) und/oder die Reflexionsfläche (11) enthält, in Bezug auf ein oder mehrere andere Elemente des Systems (1), die ortsfest montiert sind, beweglich montiert ist.

5. System zur Kontrolle (1) nach Anspruch 4, **dadurch gekennzeichnet, dass** die Trägervorrichtung (3) in Bezug auf die Achse des optischen Pfads des Lichtbilds zwischen der Projektionsvorrichtung (4) und der Erfassungsvorrichtung (5) beweglich montiert ist.

6. System zur Kontrolle (1) nach einem der vorhergehenden Ansprüche, **dadurch gekennzeichnet, dass** die Recheneinheit dazu ausgestaltet ist, eine Verarbeitung von Lichtbildern durch Vergleichen der Position von mindestens zwei Punkten eines projizierten Lichtbilds (7) mit mindestens zwei Punkten des erfassten Lichtbilds (8), das aus dem projizierten Lichtbild (7) stammt und das optische Element durchquert hat, zu implementieren.

7. Verfahren zur Kontrolle durch Implementieren eines Systems zur Kontrolle (1) mindestens einer Komponente eines optischen Elements (2), umfassend:
- eine Projektionsvorrichtung (4), wie etwa einen Bildschirm oder ein Display, zum Projizieren mindestens eines Lichtbilds auf ein zu kontrollierendes optisches Element (2),
- eine Erfassungsvorrichtung (5) zur Erfassung mindestens eines Teils des Lichtbilds, der das zu kontrollierende optische Element (2) durchquert hat und aus dem projizierten Lichtbild (7) stammt,
das Verfahren umfassend mindestens:
- einen Schritt des Positionierens eines zu kontrollierenden optischen Elements (2),
- einen Schritt des Projizierens eines Lichtbilds (7) auf mindestens einen Teil der Fläche des zu kontrollierenden optischen Elements (2), wobei das Bild einer periodischen Lichtintensitätsänderung entspricht, die gemäß parallelen und gemäß einer definierten Achse (9) ausgerichteten Streifen angeordnet ist,
- einen Schritt des Erfassens mindestens eines Teils des Lichtbilds (8), der das zu kontrollierende optische Element (2) durchquert hat und aus dem projizierten Lichtbild (7) stammt,
**dadurch gekennzeichnet, dass** das Verfahren umfasst:
- einen Schritt des Vergleichens der Position von mindestens zwei Punkten des projizierten ersten Lichtbilds (7), das von der Erfassungsvorrichtung erfasst wird, ohne das optische Element zu durchqueren, mit der Position von mindestens zwei Punkten des erfassten Lichtbilds (8), das aus dem projizierten ersten Lichtbild (7) stammt und das optische Element (2) durchquert hat,
- einen Schritt des Projizierens eines neuen Lichtbilds (7) auf mindestens einen Teil der Fläche des zu kontrollierenden optischen Elements (2), wobei das neue Bild einer Lichtintensitätsänderung entspricht, die gemäß Streifen angeordnet ist, die gemäß einer Achse (10) ausgerichtet sind, die identisch mit der des zuvor projizierten ersten Bilds ist, wobei die Lichtintensitätsänderung eine Wellenlänge aufweist, die verschieden von der des zuvor projizierten ersten Bilds ist,
- einen Schritt des Erfassens mindestens eines Teils des Lichtbilds (8), der das zu kontrollierende optische Element (2) durchquert hat und aus dem projizierten neuen Lichtbild (7) stammt,
- einen Schritt des Vergleichens der Lichtintensität mindestens eines Punkts des projizierten neuen Lichtbilds (7), das von der Erfassungsvorrichtung erfasst wird, ohne das optische Element zu durchqueren, mit mindestens einem Punkt des erfassten Lichtbilds (8), das aus dem projizierten neuen Lichtbild (7) stammt und das optische Element (2) durchquert hat,
- einen Schritt des Bestimmens mindestens einer Komponente, entsprechend der Achse (9) der Lichtintensitätsänderung, der Position des Punkts des projizierten Lichtbilds (7), entsprechend dem mindestens einen Punkt einer ermittelten Position eines erfassten Lichtbilds (8), das aus einem projizierten Lichtbild (7) stammt und das optische Element (2) durchquert hat,
- einen Schritt des Bestimmens der Vergrößerung oder prismatischen Verlagerung des optischen Elements (2) gemäß der Achse (9) der Lichtintensitätsänderung des Bilds (7), beruhend auf dem Schritt des Vergleichens der Lichtintensität zwischen zwei mindestens einem Punkt,
- einen Schritt des Evaluierens der optischen Leistung des optischen Elements (2) gemäß der Achse (9) der Lichtintensitätsänderung des Bilds (7) anhand seiner Vergrößerung oder prismatischen Verlagerung.

8. Verfahren zur Kontrolle nach Anspruch 7, **dadurch gekennzeichnet, dass** das Verfahren ferner umfasst:
- einen Schritt des Projizierens eines zweiten Lichtbilds (7) auf mindestens einen Teil der Fläche des zu kontrollierenden optischen Elements (2), wobei das zweite Bild einer periodischen Lichtintensitätsänderung entspricht, die gemäß parallelen und gemäß einer zweiten Achse (9) ausgerichteten Streifen angeordnet ist, wobei die zweite Achse (9) die Achse (9) eines zuvor projizierten ähnlichen Bilds schneidet,
- einen Schritt des Erfassens mindestens eines Teils des Lichtbilds 8, der das zu kontrollierende optische Element (2) durchquert hat und aus dem projizierten zweiten Lichtbild (7) stammt,
- einen Schritt des Vergleichens der Position von mindestens zwei Punkten des projizierten zweiten Lichtbilds (7) mit mindestens zwei Punkten des erfassten Lichtbilds (8), das aus dem projizierten zweiten Lichtbild (7) stammt und das optische Element (2) durchquert hat,
- einen Schritt des Bestimmens der Vergrößerung oder prismatischen Verlagerung des optischen Elements (2) gemäß der Achse (9) der Lichtintensitätsänderung des zweiten Bilds (7),
- einen Schritt des Evaluierens der optischen Leistung des optischen Elements (2) anhand der Vergrößerungen oder prismatischen Verlagerungen, die mindestens gemäß den Lichtintensitätsänderungen des ersten Bilds und des zweiten Bilds bestimmt werden.

9. Verfahren zur Kontrolle nach einem der Ansprüche 7 oder 8, **dadurch gekennzeichnet, dass** das Verfahren ferner umfasst:
- einen Schritt des Projizierens eines neuen Lichtbilds (7) auf mindestens einen Teil der Fläche des zu kontrollierenden optischen Elements (2), wobei das neue Bild einer Lichtintensitätsänderung entspricht, die identisch mit der des zuvor projizierten ähnlichen Bilds ist, wobei die Intensitätsänderung gemäß Streifen angeordnet ist, die gemäß einer Achse (10) ausgerichtet sind, die identisch mit der des zuvor projizierten ähnlichen Bilds ist, wobei die Lichtintensitätsänderung eine Phasenverschiebung in Bezug auf die des zuvor projizierten ähnlichen Bilds aufweist,
- einen Schritt des Erfassens mindestens eines Teils des Lichtbilds (8), der das zu kontrollierende optische Element (2) durchquert hat und aus dem projizierten neuen Lichtbild (7) stammt,
- einen Schritt des Vergleichens der Lichtintensität mindestens eines Punkts des projizierten neuen Lichtbilds (7) mit mindestens einem Punkt des erfassten Lichtbilds (8), das aus dem projizierten neuen Lichtbild (7) stammt und das optische Element (2) durchquert hat,
- einen Schritt des Bestimmens mindestens einer Komponente der Position des Punkts des projizierten Lichtbilds (7), entsprechend dem mindestens einen Punkt einer ermittelten Position eines erfassten Lichtbilds (8), das aus einem projizierten Lichtbild (7) stammt und das optische Element (2) durchquert hat.

## Claims

1. Control system (1) for testing at least one component of an optical element (2), the system (1) comprising at least:
- a support device (3) for at least one optical element (2) that is to be tested,
- a projection device (4), such as a screen or a display, for projecting at least one luminous image onto an optical element (2) that is to be tested, the luminous image comprising a defined pattern,
- an acquisition device (5) for acquiring at least part of the luminous image that has passed through the optical element (2) that is to be tested and is derived from the projected luminous image, the solid-angle field-of-view (6) of the acquisition device (5) comprising the support device (3) associated with the optical element (2) that is to be tested,
**characterized in that** the system also comprises:
- a calculation unit configured to determine the optical power of the element (2) being tested from, on the one hand, at least two points on at least one projected luminous image (7) acquired by the acquisition device (5) without passing through the optical element (2), and, on the other hand, at least two points on the acquired luminous image (8) derived from the projected luminous image (7) and having passed through the optical element (2),
the projection device (4) being configured to successively project at least two images (7), each image (7) corresponding to a periodic variation in luminous intensity arranged according to parallel fringes oriented along an identical axis (10), the variation in luminous intensity of the second projected image having a wavelength different from that of the first previously projected image.

2. Control system (1) according to Claim 1, **characterized in that** at least the support device (3), the projection device (4) and the acquisition device (5) are mounted on the one same structure.

3. Control system (1) according to either of the preceding claims, **characterized in that** the system (1) comprises at least one reflection surface (11) positioned on the axis of the optical path of the luminous image (7) between the projection device (4) and the acquisition device (5).

4. Control system (1) according to one of the preceding claims, **characterized in that** of a list of elements including the support device (3), the projection device (4), the acquisition device (5) and/or the reflection surface (11) at least one is mounted so that it is mobile with respect to one or more other element(s) of the system (1) that are mounted fixedly.

5. Control system (1) according to Claim 4, **characterized in that** the support device (3) is mounted so that it is mobile relative to the axis of the optical path of the luminous image between the projection device (4) and the acquisition device (5).

6. Control system (1) according to one of the preceding claims, **characterized in that** the calculation unit is configured to perform image processing of the luminous images by comparing the position of at least two points on a projected luminous image (7) with at least two points on the acquired luminous image (8) derived from the projected luminous image (7) and having passed through the optical element.

7. Control method implemented by a control system (1) for testing at least one component of an optical element (2), comprising:
- a projection device (4), such as a screen or a display, for projecting at least one luminous image onto an optical element (2) that is to be tested,
- an acquisition device (5) for acquiring at least part of the luminous image that has passed through the optical element (2) that is to be tested and is derived from the projected luminous image (7),
the method comprising at least:
- a step of positioning an optical element (2) that is to be tested,
- a step of projecting a luminous image (7) onto at least part of the surface of the optical element (2) that is to be tested, the image corresponding to a periodic variation in luminous intensity arranged according to parallel fringes and oriented along a defined axis (9),
- a step of acquiring at least part of the luminous image (8) that has passed through the optical element (2) that is to be tested and is derived from the projected luminous image (7),
**characterized in that** the method comprises:
- a step of comparing the position of at least two points on the first projected luminous image (7) acquired by the acquisition device without passing through the optical element, with the position of at least two points on the acquired luminous image (8) derived from the first projected luminous image (7) and having passed through the optical element (2),
- a step of projecting a new luminous image (7) onto at least part of the surface of the optical element (2) that is to be tested, the new image corresponding to a variation in luminous intensity arranged according to fringes oriented along an axis (10) identical to that of the first previously projected image, the variation in luminous intensity having a wavelength different from that of the first previously projected image,
- a step of acquiring at least part of the luminous image (8) that has passed through the optical element (2) that is to be tested and is derived from the new projected luminous image (7),
- a step of comparing the luminous intensity of at least one point on the new projected luminous image (7) acquired by the acquisition device without passing through the optical element, with at least one point on the acquired luminous image (8) derived from the new projected luminous image (7) and having passed through the optical element (2),
- a step of determining at least one component, corresponding to the axis (9) of variation of luminous intensity, of the position of the point on the projected luminous image (7) that corresponds to the at least one point of identified position in an acquired luminous image (8) derived from a projected luminous image (7) and having passed through the optical element (2),
- a step of determining the magnification or prismatic displacement of the optical element (2) along the axis (9) of variation of luminous intensity of the image (7) on the basis of the step of comparing the luminous intensity between two at least one point,
- a step of evaluating the optical power of the optical element (2) along the axis (9) of variation of luminous intensity of the image (7) from its magnification or prismatic displacement.

8. Control method according to Claim 7, **characterized in that** the method also comprises:
- a step of projecting a second luminous image (7) onto at least part of the surface of the optical element (2) that is to be tested, the second image corresponding to a periodic variation in luminous intensity arranged according to parallel fringes and oriented along a second axis (9), the second axis (9) being secant to the axis (9) of a previously projected similar image,
- a step of acquiring at least part of the luminous image 8 that has passed through the optical element (2) that is to be tested and is derived from the second projected luminous image (7),
- a step of comparing the position of at least two points on the second projected luminous image (7) with at least two points on the acquired luminous image (8) derived from the second projected luminous image (7) and having passed through the optical element (2),
- a step of determining the magnification or prismatic displacement of the optical element (2) along the axis (9) of variation of luminous intensity of the second image (7),
- a step of evaluating the optical power of the optical element (2) from the magnifications or prismatic displacements determined according at least to the variations in luminous intensity of the first image and of the second image.

9. Control method according to one of Claims 7 or 8, **characterized in that** the method also comprises:
- a step of projecting a new luminous image (7) onto at least part of the surface of the optical element (2) that is to be tested, the new image corresponding to a variation in luminous intensity identical to that of the previously projected similar image, the variation in intensity being arranged according to fringes oriented along an axis (10) identical to that of the previously projected similar image, the variation in luminous intensity being phase-shifted with respect to that of the previously projected similar image,
- a step of acquiring at least part of the luminous image (8) that has passed through the optical element (2) that is to be tested and is derived from the new projected luminous image (7),
- a step of comparing the luminous intensity of at least one point on the new projected luminous image (7) with at least one point on the acquired luminous image (8) derived from the new projected luminous image (7) and having passed through the optical element (2),
- a step of determining at least one component of the position of the point on the projected luminous image (7) that corresponds to the at least one point of identified position in an acquired luminous image (8) derived from a projected luminous image (7) and having passed through the optical element (2).
